# EUROPEAN PATENT APPLICATION

(11) **EP 4 648 541 A1**
(43) Date of publication of application: **12.11.2025**
(21) Application number: 23913937.1
(22) Date of filing: 03.01.2023
(51) Int. Cl.: H04W 76/15, H04W 76/34, H04W 76/25

(54) **COMMUNICATION METHOD, ELECTRONIC DEVICE AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/070205
(87) International publication number: WO 2024/145777

(57) **Abstract**

The embodiments of the present disclosure relate to the technical field of mobile communications. Provided are a communication method, an electronic device and a storage medium. The communication method is applied to a multi-link station device Non-AP MLD. The method comprises: determining a first radio frame, wherein the first radio frame comprises first identification information, and the first identification information indicates whether the first radio frame is used for requesting that multi-link reconfiguration is performed for a multi-link station device Non-AP MLD; and sending the first radio frame. The embodiments of the present disclosure provide a multi-link reconfiguration mode.

## Description

### FIELD

Embodiments of the present disclosure relate to a field of mobile communication technologies, in particular to a communication method, an electronic device and a storage medium.

### BACKGROUND

In order to achieve high throughput, low network delay and high reliability, a multi-link operation (MLO) mechanism is introduced into Wi-Fi technology. A device supporting an MLO function is called a multi-link device (MLD). With the help of MLO technology, multiple links may be established between an access point multi-link device (AP MLD) and a non-access point multi-link device (Non-AP MLD) across frequency bands. The MLO may not only effectively improve the system throughput, but also reduce the network delay, decrease the packet drop rate and improve the communication reliability by selecting links optimally or switching links dynamically.

In the MLO mechanism, after negotiation and successful establishment of multiple links between the AP MLD and the Non-AP MLD, multi-link reconfiguration may also be carried out therebetween. Therefore, it is necessary to provide a way to support the multi-link reconfiguration to improve the MLO mechanism.

### SUMMARY

Embodiments of the present disclosure provide a communication method, an electronic device and a storage medium to provide a way to support multi-link reconfiguration.

In an aspect, embodiments of the present disclosure provide a communication method, which is performed by a non-access point multi-link device (Non-AP MLD), and includes:
determining a first wireless frame, in which the first wireless frame includes first identification information, and the first identification information indicates whether the first wireless frame is configured to request multi-link reconfiguration for the Non-AP MLD; and
sending the first wireless frame.

In another aspect, embodiments of the present disclosure also provide a communication method, which is performed by an access point multi-link device (AP MLD), and includes:
receiving a first wireless frame, in which the first wireless frame includes first identification information, and the first identification information indicates whether the first wireless frame is configured to request multi-link reconfiguration for a Non-AP MLD.

In another aspect, embodiments of the present disclosure also provide an electronic device, which is a Non-AP MLD, and includes:
a determining module configured to determine a first wireless frame, in which the first wireless frame includes first identification information, and the first identification information indicates whether the first wireless frame is configured to request multi-link reconfiguration for the Non-AP MLD; and
a sending module configured to send the first wireless frame.

In another aspect, embodiments of the present disclosure also provide an electronic device, which is an AP MLD, and includes:
a receiving module configured to receive a first wireless frame, in which the first wireless frame includes first identification information, and the first identification information indicates whether the first wireless frame is configured to request multi-link reconfiguration for a Non-AP MLD.

Embodiments of the present disclosure also provide an electronic device, which includes a memory, a processor and a computer program stored in the memory and capable of running on the processor. When the processor executes the program, the method described in one or more embodiments of the present disclosure is realized.

Embodiments of the present disclosure also provide a computer-readable storage medium, on which a computer program is stored, which, when executed by a processor, realizes the method as described in one or more embodiments of the present disclosure.

In the embodiments of the present disclosure, the Non-AP MLD determines the first wireless frame, the first wireless frame includes the first identification information, and the first identification information indicates whether the first wireless frame is configured to request the multi-link reconfiguration for the Non-AP MLD. In this way, when the Non-AP MLD adds new links or deletes established links, it may realize the multi-link reconfiguration.

Additional aspects and advantages of the embodiments of the present disclosure will be set forth in part in the description which follows, and will be apparent from the following description, or may be learned by practice of the present disclosure.

### BRIEF DESCRIPTION OF THE DRAWINGS

In order to explain the technical scheme of the embodiments of the present disclosure more clearly, the drawings needed to be used in the description of the embodiments of the present disclosure will be briefly introduced below. Obviously, the drawings in the following description are only some embodiments of the present disclosure. For those ordinary skilled in the related art, other drawings may be obtained according to these drawings without paying creative labor.
Fig. 1 is a flow chart of a communication method provided by an embodiment of the present disclosure.
Fig. 2 is a schematic diagram of a first example of an embodiment of the present disclosure.
Fig. 3 is another schematic diagram of a first example of an embodiment of the present disclosure.
Fig. 4 is another flow chart of a communication method provided by an embodiment of the present disclosure.
Fig. 5 is a schematic diagram of an electronic device provided by an embodiment of the present disclosure.
Fig. 6 is another schematic diagram of an electronic device provided by an embodiment of the present disclosure.
Fig. 7 is another schematic diagram of an electronic device provided by an embodiment of the present disclosure.

### DETAILED DESCRIPTION

Reference will now be made in detail to illustrative embodiments, examples of which are illustrated in the accompanying drawings. The following description refers to the drawings, and unless otherwise indicated, the same numbers in different drawings indicate the same or similar elements. The implementations described in the following illustrative embodiments do not represent all implementations consistent with the present disclosure. Rather, they are merely examples of devices and methods consistent with some aspects of the present disclosure as detailed in the appended claims.

In the embodiments of the present disclosure, the terms used are for the purpose of describing specific embodiments only, and are not intended to limit the present disclosure. The singular forms "a", "the" and "said" used in the present disclosure and the appended claims are also intended to include the plural forms, unless the context clearly indicates other meaning. It should also be understood that the term "and/or" as used herein refers to and includes any or all possible combinations of one or more associated listed items. For example, A and/or B may mean that A exists alone, A and B exist at the same time, and B exists alone. The character "/"generally indicates that the former and latter associated objects have an OR relationship. The term "multiple/a plurality of" refers to two or more, and in view of this, the term "multiple/a plurality of" may also be understood as "at least two" in the embodiments of the present disclosure.

It should be understood that although the terms first, second, third, etc. may be used to describe various information in the present disclosure, these information should not be limited to these terms. These terms are only used to distinguish the same type of information from each other. For example, without departing from the scope of the present disclosure, the first information may also be called the second information, and similarly, the second information may also be called the first information. Depending on the context, for example, the word "if" used here may be interpreted as "when" or "while" or "in response to determining......".

In the following, the technical scheme in the embodiments of the present disclosure will be clearly and completely described with reference to the attached drawings. Obviously, the described embodiments are only part of the embodiments of the present disclosure, but not all the embodiments. Based on the embodiments of the present disclosure, all other embodiments obtained by those ordinary skilled in the related art without creative work belong to the scope of protection of the present disclosure.

The embodiments of the present disclosure provide a communication method, an electronic device and a storage medium, which are used to provide a way to support multi-link reconfiguration.

The method and the device are based on the same application concept. Since the principle of solving problems is similar for the method and the device, the implementations of the device and the method may be referred to each other, and the repetition is not repeated here.

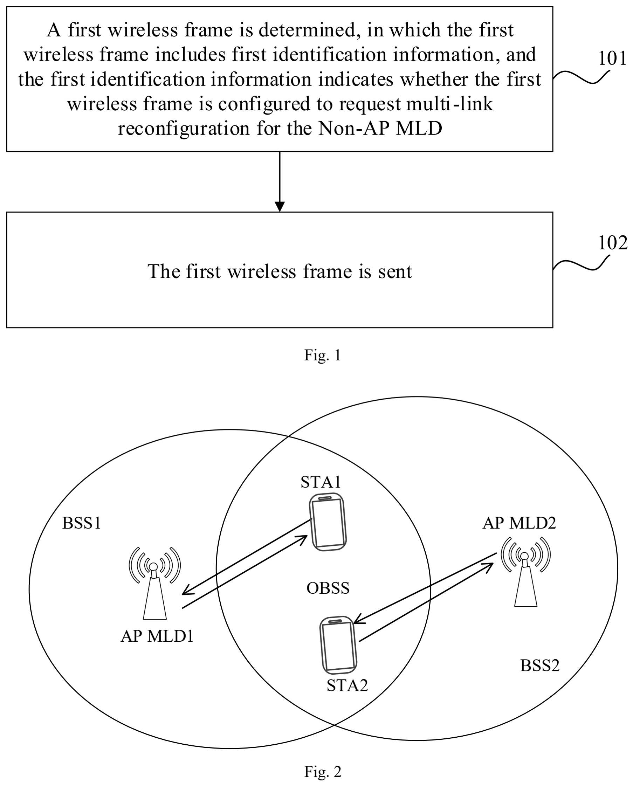

As shown in Fig. 1, the embodiments of the present disclosure provide a communication method, and optionally, the method may be performed by a Non-AP MLD. Optionally, in the embodiments of the present disclosure, the Non-AP MLD, such as an electronic device with a wireless network access function, provides a frame delivery service to enable information to be delivered; and an AP MLD, such as a device with a wireless-to-wired bridging function, is responsible for extending a service provided by a wired network to a wireless network.

The method may include the following steps.

In step 101, a first wireless frame is determined, in which the first wireless frame includes first identification information, and the first identification information indicates whether the first wireless frame is configured to request multi-link reconfiguration for the Non-AP MLD.

In a wireless local area network, a basic service set (BSS) may include an access point (AP) and one or more stations (STAs) communicated with the AP. A basic service set may be connected to a distribution system (DS) through its AP, and then connected to another basic service set to form an extended service set (ESS). As a first example, referring to Fig. 2, AP1 and STA1 constitute BSS1, and AP2 and STA2 constitute BSS2. When coverage areas of two or more BSSs overlap, an overlapping basic service set (OBSS) is formed. As shown in Fig. 2, BSS1 and BSS2 overlap to form an OBSS.

Optionally, in the embodiments of the present disclosure, the AP and the STA may be devices supporting multiple links. For example, they may be respectively denoted as AP MLD and Non-AP MLD, the AP MLD may represent an access point supporting a multi-link communication function, and the Non-AP MLD may represent a station supporting a multi-link communication function.

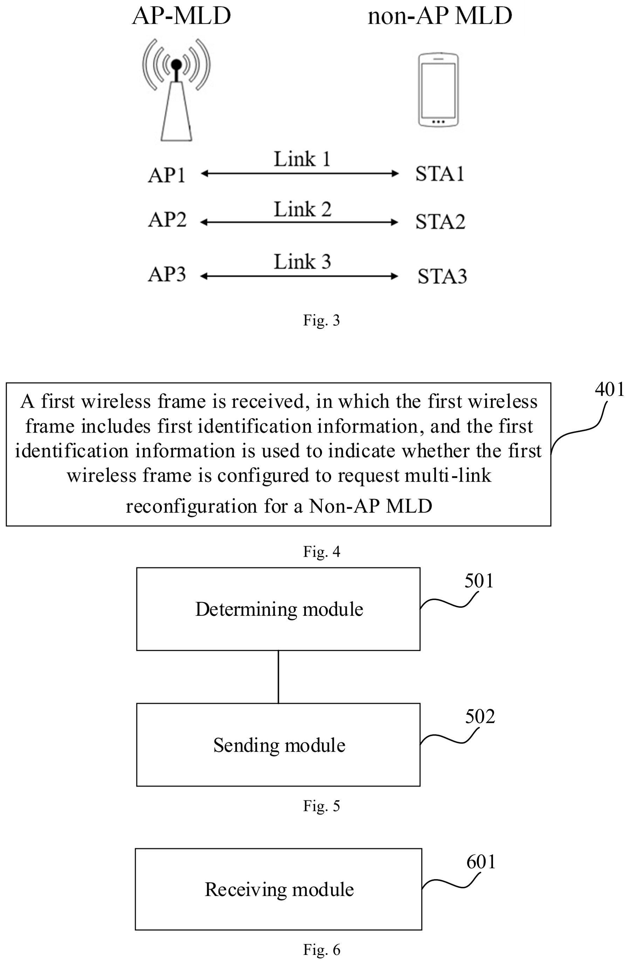

Referring to Fig. 3, the AP MLD may include three affiliated APs, such as AP1, AP2 and AP3, as shown in Fig. 3. Each AP may work in link 1, link 2 and link 3, respectively. The Non-AP MLD may also include three affiliated STAs, such as STA1, STA2 and STA3, as shown in Fig. 2. STA1 works in link 1, STA2 works in link 2 and STA3 works in link 3.

For convenience of description, in the following, an example in which an AP communicates with an STA under multiple links is mainly described, however, the illustrative embodiments of the present disclosure are not limited to this. In the example of Fig. 3, it is assumed that AP1 and STA1 communicate through a corresponding first link, i.e., link 1. Similarly, AP2 and STA2 communicate through a corresponding second link, i.e., link 2, and AP3 communicates with STA3 through a third link, i.e., link 3. In addition, link 1 to link 3 may be multiple links at different frequencies, for example, links at 2.4GHz, 5GHz and 6GHz, or several links with the same or different bandwidths at 2.4GHz. In addition, multiple channels may exist under each link. It may be understood that the communication scenario shown in Fig. 2 is only illustrative, and the concept of the present disclosure is not limited to this. For example, an AP MLD may be connected to a plurality of (three) Non-AP MLDs, or an AP may communicate with a plurality of other types of stations under each link.

Usually, the multiple links between the Non-AP MLD and the AP MLD are established through exchange and negotiation of an association request frame (or a re-association request frame) and an association response frame (or a re-association response frame). For example, the above wireless frame carries a basic multi-link element to negotiate the number of links established between the Non-AP MLD and the AP MLD as well as the basic attributes of each link. For example, the basic attributes may include a link ID, and an MLD capability and operation.

After the negotiation and successful establishment of the multiple links between the Non-AP MLD and the AP MLD, the link between the Non-AP MLD and the AP MLD may be reconfigured. For example, the AP MLD may add or delete affiliated APs to add new links or delete established links. For example, the AP MLD indicates that the AP MLD has added a new affiliated AP through the basic multi-link element of a beacon frame or a probe response frame and a reduced neighbor report element. Alternatively, the Non-AP MLD may add new links or delete established links. For example, taking deleting the established links as an example, when the remaining power is low due to the limited battery capacity of the Non-AP MLD side, the Non-AP MLD side may need to initiate the removal of part of the established links to the AP MLD, so as to reduce its own energy consumption and avoid the signal interruption caused by the exhaustion of energy. Therefore, the Non-AP MLD deletes the established links. Alternatively, after the multiple links between the Non-AP MLD and the AP MLD are established, when the Non-AP MLD detects that the AP MLD needs to add a new affiliated AP, the Non-AP MLD side needs to add an affiliated STA through a re-association mechanism to establish a new link. This way will interrupt the service transmission on the existing link, so a way is needed to realize the seamless addition of the new link without affecting the established link.

When the Non-AP MLD may add new links or delete established links, or in other scenarios, the Non-AP MLD determines the first wireless frame, the first wireless frame includes the first identification information, and the first identification information indicates whether the first wireless frame is configured to request the multi-link reconfiguration for the Non-AP MLD. Optionally, the first wireless frame may be a multi-link reconfiguration frame, which is used for multi-link reconfiguration negotiation between the AP MLD and the Non-AP MLD after establishment of multiple links, and the first wireless frame includes a multi-link reconfiguration request frame.

In step 102, the first wireless frame is sent.

The Non-AP MLD sends the first wireless frame, and after receiving the first wireless frame, the AP MLD determines whether the first wireless frame requests the multi-link reconfiguration for the Non-AP MLD according to the first identification information. For example, the content of the multi-link reconfiguration includes the number of established links and the basic properties of each link. For example, the basic attributes include the link ID, and the MLD capability and operation, etc. In this way, when the Non-AP MLD adds new links or deletes established links, the multi-link reconfiguration may be realized.

An embodiment of the present disclosure provides a communication method. Optionally, the method may be performed by a Non-AP MLD, and the method includes:
determining a first wireless frame, in which the first wireless frame includes first identification information, and the first identification information indicates whether the first wireless frame is used to request multi-link reconfiguration for the Non-AP MLD; and
sending the first wireless frame.

The first identification information is carried in first multi-link reconfiguration information element of the first wireless frame. For example, the multi-link reconfiguration information element is carried in a multi-link reconfiguration request frame.

An embodiment of the present disclosure provides a communication method. Optionally, the method may be performed by a Non-AP MLD, and the method includes:
determining a first wireless frame, in which the first wireless frame includes first identification information, and the first identification information indicates whether the first wireless frame is used to request multi-link reconfiguration for the Non-AP MLD; and
sending the first wireless frame.

The first identification information is carried in a first multi-link reconfiguration information element of the first wireless frame.

Specifically, the first identification information is carried in a multi-link control field of the first multi-link reconfiguration information element.

The first identification information is set as a first parameter value, and indicates that a type of the first wireless frame is a multi-link reconfiguration request. For example, the first parameter value is 1.

For example, the first identification information is a reconfiguration request identifier bit. As a second example, the format of the multi-link control field is shown in table 1 below:

**Table 1**

| Content | Type | Reconfiguration request | Present bitmap |
|---|---|---|---|
| Bits | 3 | 1 | 12 |
| Bit sequence | B0 to B2 | B3 | B4 to B15 |

As shown in Table 1, the multi-link control field includes a reconfiguration request identifier, and the reconfiguration request identifier indicates a type of a multi-link reconfiguration frame of a multi-link reconfiguration element. For example, the type of the multi-link reconfiguration frame is the multi-link reconfiguration request or a multi-link reconfiguration response.

Specifically, as shown in Table 1, a reconfiguration request identifier bit is added to bit B3 of the multi-link control field in the multi-link reconfiguration element, and the reconfiguration request identifier bit is set as 1, which means that the multi-link reconfiguration frame carrying the multi-link reconfiguration element is the multi-link configuration request.

When the reconfiguration request identifier bit is set as 0, it means that the multi-link reconfiguration frame carrying the multi-link reconfiguration element is the multi-link reconfiguration response.

An embodiment of the present disclosure provides a communication method. Optionally, the method may be performed by a Non-AP MLD, and the method includes:
determining a first wireless frame, in which the first wireless frame includes first identification information, and the first identification information indicates whether the first wireless frame is used to request multi-link reconfiguration for the Non-AP MLD; and
sending the first wireless frame.

The first wireless frame includes a first protected EHT action information element; and
the first protected EHT action information element includes second identification information, and the second identification information indicates that a type of the first wireless frame is a multi-link reconfiguration frame.

The first wireless frame, such as a multi-link (ML) reconfiguration request frame, may be used for multi-link reconfiguration negotiation between an AP MLD and the Non-AP MLD after multi-link setup, and includes a multi-link reconfiguration request and a multi-link reconfiguration response. The first wireless frame includes the first protected EHT action information element. EHT stands for extremely high throughput (EHT).

As a third example, the multi-link reconfiguration frame may be an action frame, as shown in Table 2 below.

**Table 2**

| Action (Order) | Information |
|---|---|
| 1 | Category |
| 2 | Protected EHT action |
| 3 | Dialog token |
| 4 | Multi-link reconfiguration element |

The first wireless frame includes but is not limited to the above information element, field or subfield: category, protected EHT action, dialog token, and multi-link reconfiguration element.

Further, the first protected EHT action information element includes second identification information, and the second identification information indicates that a type of the first wireless frame is a multi-link reconfiguration frame. As a fourth example, the format of the first protected EHT action information element is shown in table 3 below.

**Table 3**

| Value | Meaning | Time priority |
|---|---|---|
| ... | ... | ... |
| 8 | Multi-link reconfiguration | No (time priority is not defined) |

When the value of the first protected EHT action information element is 8, it indicates that the type of the first wireless frame is the multi-link reconfiguration frame.

An embodiment of the present disclosure provides a communication method. Optionally, the method may be performed by a Non-AP MLD, and the method includes:
determining a first wireless frame, in which the first wireless frame includes first identification information, and the first identification information indicates whether the first wireless frame is used to request multi-link reconfiguration for the Non-AP MLD.

Optionally, the first identification information is carried in a first multi-link reconfiguration information element of the first wireless frame.

The first identification information is carried in a multi-link control field of the first multi-link reconfiguration information element. The first identification information is set as a first parameter value, and indicates that a type of the first wireless frame is a multi-link reconfiguration request.

Optionally, the first wireless frame includes a first protected EHT action information element.

The first protected EHT action information element includes second identification information, and the second identification information indicates that a type of the first wireless frame is a multi-link reconfiguration frame.

The method further includes sending the first wireless frame. The first wireless frame includes a multi-link reconfiguration request frame.

Optionally, the Non-AP MLD determines the first wireless frame carrying the first identification information, and the first identification information indicates whether the first wireless frame is used to request multi-link reconfiguration for the Non-AP MLD. The second identification information is carried by the first protected EHT action information element, and indicates that the type of the first wireless frame is the multi-link reconfiguration frame, so that the multi-link reconfiguration may be realized when the Non-AP MLD adds a new link or deletes an established link.

An embodiment of the present disclosure provides a communication method. Optionally, the method may be performed by a Non-AP MLD, and the method includes:
receiving a second wireless frame, in which the second wireless frame includes third identification information, and the third identification information indicates whether the second wireless frame is used to respond to a request of the multi-link reconfiguration.

Optionally, the second wireless frame includes a ML reconfiguration response frame.

After receiving the first wireless frame, the AP MLD determines that the first wireless frame requests the multi-link reconfiguration for the Non-AP MLD according to the first identification information, and then feeds back the second wireless frame to the Non-AP MLD to indicate that the AP MLD accepts or rejects the request of the multi-link reconfiguration.

An embodiment of the present disclosure provides a communication method. Optionally, the method may be performed by a Non-AP MLD, and the method includes:
receiving a second wireless frame, in which the second wireless frame includes third identification information, and the third identification information indicates whether the second wireless frame is used to respond to a request of the multi-link reconfiguration.

The third identification information is carried in a second multi-link reconfiguration information element of the second wireless frame. For example, the third identification information is a reconfiguration request identifier bit, and in a case that the reconfiguration request identifier bit is set as 0, it means that the multi-link reconfiguration frame carrying the multi-link reconfiguration element is a multi-link reconfiguration response. The third identification information may also be a reconfiguration response bit, and in a case that the reconfiguration response bit is set as 1, it means that the multi-link reconfiguration frame carrying the multi-link reconfiguration element is a multi-link reconfiguration response.

An embodiment of the present disclosure provides a communication method. Optionally, the method may be performed by a Non-AP MLD, and the method includes:
receiving a second wireless frame, in which the second wireless frame includes third identification information, and the third identification information indicates whether the second wireless frame is used to respond to a request of the multi-link reconfiguration.

The second wireless frame includes a second protected EHT action information element.

The second protected EHT action information element includes fourth identification information, and the fourth identification information indicates that a type of the second wireless frame is a multi-link reconfiguration frame. Referring to the aforementioned table 3, when the value of the second protected EHT action information element is 8, it indicates that the type of the second wireless frame is a multi-link reconfiguration frame.

An embodiment of the present disclosure provides a communication method. Optionally, the method may be performed by a Non-AP MLD, and the method includes:
receiving a second wireless frame, in which the second wireless frame includes third identification information, and the third identification information indicates whether the second wireless frame is used to respond to a request of the multi-link reconfiguration.

The first identification information indicates that the first wireless frame is used to request the multi-link reconfiguration for the Non-AP MLD, and a second dialog token parameter of the second wireless frame is the same as a first dialog token parameter of the first wireless frame.

When the first wireless frame is used to request the multi-link reconfiguration for the Non-AP MLD, for example, when the AP MLD receives the first wireless frame carrying the multi-link reconfiguration element, and the reconfiguration request identifier bit is 1, the dialog token in the second wireless frame should be the same as the dialog token in the first wireless frame, so as to indicate that the second wireless frame is used to respond to the first wireless frame.

An embodiment of the present disclosure provides a communication method. Optionally, the method may be performed by a Non-AP MLD, and the method includes:
receiving a second wireless frame, in which the second wireless frame includes third identification information, and the third identification information indicates whether the second wireless frame is used to respond to a request of the multi-link reconfiguration.

The third identification information is carried in a second multi-link reconfiguration information element of the second wireless frame.

The second multi-link reconfiguration information element includes status code information, and the status code information indicates whether an AP MLD accepts the request of the multi-link reconfiguration for the Non-AP MLD.

In a case that the AP MLD receives the first wireless frame, and the first wireless frame is used to request the multi-link reconfiguration for the Non-AP MLD, the AP MLD sends the second wireless frame to respond to the first wireless frame, and indicates whether the second wireless frame is used to respond to the request of the multi-link reconfiguration through the third identification information. Specifically, the third identification information is carried in the second multi-link reconfiguration information element of the second wireless frame, the second multi-link reconfiguration information element includes the status code information, and the status code information indicates whether the AP MLD accepts the request of the multi-link reconfiguration for the Non-AP MLD. For example, in a case that the status code information is set as Accepted, it means that the request of the multi-link reconfiguration is accepted; and in a case that the status code information is set as Rejected, it means that the request of the multi-link reconfiguration is rejected.

In an optional embodiment, the status code information is carried in an STA information (Info) field of per-STA profile corresponding to a link identifier carried in the first wireless frame.

The status code information is carried in the per-STA profile of the second multi-link reconfiguration information element; and the per-STA profile is per-STA profile corresponding to the link ID carried in the first wireless frame.

The status code information carries the STA Info field of the per-STA profile, and the status code information includes but is not limited to the following statuses: multi-link reconfiguration accepted and multi-link reconfiguration rejected. As a fifth example, the STA Info field is shown in table 4 below.

**Table 4**

| Information content | Station information length (STA Info length) | Station MAC address (STA MAC address) | Delete Timer | Status code |
|---|---|---|---|---|
| Number of octets | 1 | 0 or 4 | 0 or 6 | 0 or 2 |

In an alternative embodiment, the method includes the followings.

An STA control field in the per-STA profile includes a status code present indicator subfield, and the status code present indicator subfield indicates whether the status code information is present in the STA information field. The STA control field of the per-STA profile also includes the status code present indicator subfield. For example, in a case that the status code present indicator subfield is set as 1, it means that the status code information is present in the STA information field; and in a case that the status code present indicator subfield is set as 0, it means that the status code information is not present in the STA information field. As a sixth example, the STA Info field is shown in table 5 below.

**Table 5**

| Content | Link ID | | Complete profile | MAC address present indicator bit | Delete timer present indicator bit | Status code present indicator bit | Reserved |
|---|---|---|---|---|---|---|---|
| Bits | 4 | | 1 | 1 | 1 | 1 | 8 |
| Bit sequence | B0 to B3 | | B4 | B5 | B6 | B7 | B8 to B15 |

An embodiment of the present disclosure provides a communication method. Optionally, the method may be performed by a Non-AP MLD, and the method includes:
receiving a second wireless frame, in which the second wireless frame includes third identification information, and the third identification information indicates whether the second wireless frame is used to respond to a request of the multi-link reconfiguration.

Optionally, the third identification information is carried in a second multi-link reconfiguration information element of the second wireless frame.

The second wireless frame includes a second protected EHT action information element.

Optionally, the second protected EHT action information element includes fourth identification information, and the fourth identification information indicates that a type of the second wireless frame is a multi-link reconfiguration frame.

Optionally, the first identification information indicates that the first wireless frame is used to request the multi-link reconfiguration for the Non-AP MLD, and a second dialog token parameter of the second wireless frame is the same as a first dialog token parameter of the first wireless frame.

Optionally, the second multi-link reconfiguration information element includes status code information, and the status code information indicates whether the AP MLD accepts the request of the multi-link reconfiguration for the Non-AP MLD.

Optionally, the status code information is carried in an STA information field of per-STA profile corresponding to a link identifier carried in the first wireless frame.

Optionally, the second wireless frame includes a multi-link reconfiguration response frame.

In a case that the AP MLD receives the first wireless frame, and the first wireless frame is used to request the multi-link reconfiguration for the Non-AP MLD, the AP MLD sends the second wireless frame to respond to the first wireless frame, and indicates whether the second wireless frame is used to respond to the request of the multi-link reconfiguration through the third identification information. The Non-AP MLD determines whether the AP MLD accepts the multi-link configuration request according to the second wireless frame.

In the embodiments of the present disclosure, the Non-AP MLD determines the first wireless frame, the first wireless frame includes the first identification information, and the first identification information indicates whether the first wireless frame is used to request the multi-link reconfiguration for the Non-AP MLD. In this way, when the Non-AP MLD adds new links or deletes established links, the multi-link reconfiguration may be realized.

The embodiments of the present disclosure provide a multi-link reconfiguration way to improve the MLO mechanism.

Referring to Fig. 4, an embodiment of the present disclosure provides a communication method. Optionally, the method may be performed by an access point multi-link device (AP MLD), and the method may include the following steps.

In step 401, a first wireless frame is received, in which the first wireless frame includes first identification information, and the first identification information is used to indicate whether the first wireless frame is configured to request multi-link reconfiguration for a Non-AP MLD.

The architecture of the WLAN to which the communication method provided by the embodiment of the present disclosure is applied refers to the aforementioned examples, and will not be repeated here.

Usually, the multiple links between the Non-AP MLD and the AP MLD are established through exchange and negotiation of an association request frame (or a re-association request frame) and an association response frame (or a re-association response frame). For example, the above wireless frame carries a basic multi-link element to negotiate the number of links established between the Non-AP MLD and the AP MLD as well as the basic attributes of each link. For example, the basic attributes may include a link ID, and an MLD capability and operation.

After the negotiation and successful establishment of the multiple links between the Non-AP MLD and the AP MLD, the link between the Non-AP MLD and the AP MLD may be reconfigured. For example, the AP MLD may add or delete affiliated APs to add new links or delete established links. For example, the AP MLD indicates that the AP MLD has added a new affiliated AP through the basic multi-link element of a beacon frame or a probe response frame and a reduced neighbor report element. Alternatively, the Non-AP MLD may add new links or delete established links. For example, taking deleting the established links as an example, when the remaining power is low due to the limited battery capacity of the Non-AP MLD side, the Non-AP MLD side may need to initiate the removal of part of the established links to the AP MLD, so as to reduce its own energy consumption and avoid the signal interruption caused by the exhaustion of energy. Therefore, the Non-AP MLD deletes the established links. Alternatively, after the multiple links between the Non-AP MLD and the AP MLD are established, when the Non-AP MLD detects that the AP MLD needs to add a new affiliated AP, the Non-AP MLD side needs to add an affiliated STA through a re-association mechanism to establish a new link. This way will interrupt the service transmission on the existing link, so a way is needed to realize the seamless access and addition of the new link without affecting the established link.

When the Non-AP MLD may add new links or delete established links, or in other scenarios, the Non-AP MLD determines the first wireless frame, the first wireless frame includes the first identification information, and the first identification information indicates whether the first wireless frame is configured to request the multi-link reconfiguration for the Non-AP MLD. Optionally, the first wireless frame may be a multi-link reconfiguration frame, which is used for multi-link reconfiguration negotiation between the AP MLD and the Non-AP MLD after establishment of multiple links, and the first wireless frame includes a multi-link reconfiguration request frame.

The Non-AP MLD sends the first wireless frame, and after receiving the first wireless frame, the AP MLD determines whether the first wireless frame requests the multi-link reconfiguration for the Non-AP MLD according to the first identification information. For example, the content of the multi-link reconfiguration includes the number of established links and the basic properties of each link. For example, the basic attributes include the link ID, and the MLD capability and operation, etc. In this way, when the Non-AP MLD adds new links or deletes established links, the multi-link reconfiguration may be realized.

An embodiment of the present disclosure provides a communication method. Optionally, the method may be performed by an AP MLD, and the method may include:
receiving a first wireless frame, in which the first wireless frame includes first identification information, and the first identification information is used to indicate whether the first wireless frame is used to request multi-link reconfiguration for the Non-AP MLD; and the first identification information is carried in a first multi-link reconfiguration information element of the first wireless frame, and the multi-link reconfiguration information element is carried in a multi-link reconfiguration request frame, for example.

An embodiment of the present disclosure provides a communication method. Optionally, the method may be performed by an AP MLD, and the method may include:
receiving a first wireless frame, in which the first wireless frame includes first identification information, and the first identification information is used to indicate whether the first wireless frame is used to request multi-link reconfiguration for the Non-AP MLD; and the first identification information is carried in a first multi-link reconfiguration information element of the first wireless frame.

The first identification information is carried in a multi-link control field of the first multi-link reconfiguration information element.

The first identification information is set as a first parameter value, and indicates that a type of the first wireless frame is a multi-link reconfiguration request. For example, the first parameter value is 1.

Referring to the aforementioned table 1, the first identification information is, for example, a reconfiguration request identifier bit, the multi-link control field includes a reconfiguration request identifier, and the reconfiguration request identifier indicates a type of a multi-link reconfiguration frame of a multi-link reconfiguration element. For example, the type of the multi-link reconfiguration frame is the multi-link reconfiguration request or a multi-link reconfiguration response.

Specifically, as shown in Table 1, a reconfiguration request identifier bit is added to bit B3 of the multi-link control field in the multi-link reconfiguration element, and the reconfiguration request identifier bit is set as 1, which means that the multi-link reconfiguration frame carrying the multi-link reconfiguration element is the multi-link configuration request.

When the reconfiguration request identifier bit is set as 0, it means that the multi-link reconfiguration frame carrying the multi-link reconfiguration element is the multi-link reconfiguration response.

An embodiment of the present disclosure provides a communication method. Optionally, the method may be performed by an AP MLD, and the method may include:
receiving a first wireless frame, in which the first wireless frame includes first identification information, and the first identification information is used to indicate whether the first wireless frame is used to request multi-link reconfiguration for a Non-AP MLD; and the first wireless frame includes a first protected EHT action information element.

The first protected EHT action information element includes second identification information, and the second identification information indicates that a type of the first wireless frame is a multi-link reconfiguration frame.

The first wireless frame, such as a multi-link (ML) reconfiguration request frame, may be used for multi-link reconfiguration negotiation between the AP MLD and the Non-AP MLD after multi-link setup, and includes a multi-link reconfiguration request and a multi-link reconfiguration response. The first wireless frame includes the first protected EHT action information element. EHT stands for extremely high throughput (EHT).

As shown in the aforementioned table 2, the multi-link reconfiguration frame may be an action frame, and the first wireless frame includes but is not limited to the above information element, field or subfield: category, protected EHT action, dialog token, and multi-link reconfiguration element.

Further, the first protected EHT action information element includes the second identification information, the second identification information indicates that the type of the first wireless frame is the multi-link reconfiguration frame, and the format of the first protected EHT action information element is shown in the aforementioned table 3. When the value of the first protected EHT action information element is 8, it indicates that the type of the first wireless frame is the multi-link reconfiguration frame.

An embodiment of the present disclosure provides a communication method. Optionally, the method may be performed by an AP MLD, and the method may include:
receiving a first wireless frame, in which the first wireless frame includes first identification information, and the first identification information is used to indicate whether the first wireless frame is used to request multi-link reconfiguration for a Non-AP MLD.

Optionally, the first identification information is carried in a first multi-link reconfiguration information element of the first wireless frame.

Optionally, the first identification information is carried in a multi-link control field of the first multi-link reconfiguration information element.

The first identification information is set as a first parameter value, and indicates that a type of the first wireless frame is a multi-link reconfiguration request.

Optionally, the first wireless frame includes a first protected EHT action information element.

The first protected EHT action information element includes second identification information, and the second identification information indicates that the type of the first wireless frame is the multi-link reconfiguration frame.

Optionally, the first wireless frame includes a multi-link reconfiguration request frame.

After receiving the first wireless frame, the AP MLD determines whether the first wireless frame requests the multi-link reconfiguration for the Non-AP MLD according to the first identification information. In this way, when the Non-AP MLD adds new links or deletes established links, the multi-link reconfiguration may be realized.

An embodiment of the present disclosure provides a communication method. Optionally, the method may be performed by an AP MLD, and the method may include:
determining a second wireless frame, in which the second wireless frame includes third identification information, and the third identification information indicates whether the second wireless frame is used to respond to a request of the multi-link reconfiguration; and
sending the second wireless frame.

Optionally, the second wireless frame includes a ML reconfiguration response frame.

After receiving the first wireless frame, the AP MLD determines that the first wireless frame requests the multi-link reconfiguration for the Non-AP MLD according to the first identification information, and then feeds back the second wireless frame to the Non-AP MLD to indicate that the AP MLD accepts or rejects the request of the multi-link reconfiguration.

An embodiment of the present disclosure provides a communication method. Optionally, the method may be performed by an AP MLD, and the method may include:
determining a second wireless frame, in which the second wireless frame includes third identification information, and the third identification information indicates whether the second wireless frame is used to respond to a request of the multi-link reconfiguration; and the third identification information is carried in a second multi-link reconfiguration information element of the second wireless frame; and
sending the second wireless frame.

The third identification information is carried in the second multi-link reconfiguration information element of the second wireless frame. For example, the third identification information is a reconfiguration request identifier bit, and in a case that the reconfiguration request identifier bit is set as 0, it means that the multi-link reconfiguration frame carrying the multi-link reconfiguration element is a multi-link reconfiguration response. The third identification information may also be a reconfiguration response bit, and in a case that the reconfiguration response bit is set as 1, it means that the multi-link reconfiguration frame carrying the multi-link reconfiguration element is a multi-link reconfiguration response.

An embodiment of the present disclosure provides a communication method. Optionally, the method may be performed by an AP MLD, and the method may include:
determining a second wireless frame, in which the second wireless frame includes third identification information, and the third identification information indicates whether the second wireless frame is used to respond to a request of the multi-link reconfiguration; and the third identification information is carried in a second multi-link reconfiguration information element of the second wireless frame; and
sending the second wireless frame.

The second wireless frame includes a second protected EHT action information element.

The second protected EHT action information element includes fourth identification information, and the fourth identification information indicates that a type of the second wireless frame is a multi-link reconfiguration frame.

The second protected EHT action information element includes the fourth identification information, and the fourth identification information indicates that the type of the second wireless frame is the multi-link reconfiguration frame. Referring to the aforementioned table 3, when the value of the second protected EHT action information element is 8, it indicates that the type of the second wireless frame is the multi-link reconfiguration frame.

An embodiment of the present disclosure provides a communication method. Optionally, the method may be performed by an AP MLD, and the method may include:
determining a second wireless frame, in which the second wireless frame includes third identification information, and the third identification information indicates whether the second wireless frame is used to respond to a request of the multi-link reconfiguration; and the third identification information is carried in a second multi-link reconfiguration information element of the second wireless frame; and
sending the second wireless frame. The first identification information indicates that the first wireless frame is used to request the multi-link reconfiguration for the Non-AP MLD, and a second dialog token parameter of the second wireless frame is the same as a first dialog token parameter of the first wireless frame.

When the first wireless frame is used to request the multi-link reconfiguration for the Non-AP MLD, for example, when the AP MLD receives the first wireless frame carrying the multi-link reconfiguration element, and the reconfiguration request identifier bit is 1, the dialog token in the second wireless frame should be the same as the dialog token in the first wireless frame, so as to indicate that the second wireless frame is used to respond to the first wireless frame.

An embodiment of the present disclosure provides a communication method. Optionally, the method may be performed by an AP MLD, and the method may include:
determining a second wireless frame, in which the second wireless frame includes third identification information, and the third identification information indicates whether the second wireless frame is used to respond to a request of the multi-link reconfiguration; and the third identification information is carried in a second multi-link reconfiguration information element of the second wireless frame; and
sending the second wireless frame, in which the second multi-link reconfiguration information element includes status code information, and the status code information indicates whether the AP MLD accepts the request of the multi-link reconfiguration for the Non-AP MLD.

In a case that the AP MLD receives the first wireless frame, and the first wireless frame is used to request the multi-link reconfiguration for the Non-AP MLD, the AP MLD sends the second wireless frame to respond to the first wireless frame, and indicates whether the second wireless frame is used to respond to the request of the multi-link reconfiguration through the third identification information. Specifically, the third identification information is carried in the second multi-link reconfiguration information element of the second wireless frame, the second multi-link reconfiguration information element includes the status code information, and the status code information indicates whether the AP MLD accepts the request of the multi-link reconfiguration for the Non-AP MLD. For example, in a case that the status code information is set as Accepted, it means that the request of the multi-link reconfiguration is accepted; and in a case that the status code information is set as Rejected, it means that the request of the multi-link reconfiguration is rejected.

In an optional embodiment, the status code information is carried in an STA information (Info) field of per-STA profile corresponding to a link identifier carried in the first wireless frame.

The status code information is carried in the per-STA profile of the second multi-link reconfiguration information element; and the per-STA profile is per-STA profile corresponding to the link ID carried in the first wireless frame.

The status code information carries the STA Info field of the Per-STA Profile, and the STA Info field is shown in the aforementioned table 4, and the status code information includes but is not limited to the following states: multi-link reconfiguration accepted and multi-link reconfiguration rejected.

In an optional embodiment, an STA control field in the per-STA profile includes a status code present indicator subfield, and the status code present indicator subfield indicates whether the status code information is present in the STA information field. The STA control field of the per-STA profile also includes the status code present indicator subfield. The STA Info field is as shown in the aforementioned table 5. For example, in a case that the status code present indicator subfield is set as 1, it means that the status code information is present in the STA information field; and in a case that the status code present indicator subfield is set as 0, it means that the status code information is not present in the STA information field.

An embodiment of the present disclosure provides a communication method. Optionally, the method may be performed by an AP MLD, and the method may include:
determining a second wireless frame, in which the second wireless frame includes third identification information, and the third identification information indicates whether the second wireless frame is used to respond to a request of the multi-link reconfiguration.

Optionally, the third identification information is carried in a second multi-link reconfiguration information element of the second wireless frame.

Optionally, the second wireless frame includes a second protected EHT action information element.

The second protected EHT action information element includes fourth identification information, and the fourth identification information indicates that a type of the second wireless frame is a multi-link reconfiguration frame.

Optionally, the first identification information indicates that the first wireless frame is used to request the multi-link reconfiguration for the Non-AP MLD, and a second dialog token parameter of the second wireless frame is the same as a first dialog token parameter of the first wireless frame.

Optionally, the second multi-link reconfiguration information element includes status code information, and the status code information indicates whether the AP MLD accepts the request of the multi-link reconfiguration for the Non-AP MLD.

Optionally, the status code information is carried in an STA information field of per-STA profile corresponding to a link identifier carried in the first wireless frame;

Optionally, an STA control field in the per-STA profile includes a status code present indicator subfield, and the status code present indicator subfield indicates whether the status code information is present in the STA information field.

The method further includes sending the second wireless frame. Optionally, the second wireless frame includes a multi-link reconfiguration response frame.

In a case that the AP MLD receives the first wireless frame, and the first wireless frame is used to request the multi-link reconfiguration for the Non-AP MLD, the AP MLD sends the second wireless frame to respond to the first wireless frame, and indicates whether the second wireless frame is used to respond to the request of the multi-link reconfiguration through the third identification information.

In the embodiments of the present disclosure, the AP MLD receives the first wireless frame, the first wireless frame includes the first identification information, and the first identification information is used to indicate whether the first wireless frame is used to request the multi-link reconfiguration for the Non-AP MLD. After receiving the first wireless frame, the AP MLD determines whether the first wireless frame requests the multi-link reconfiguration for the Non-AP MLD according to the first identification information. The embodiments of the present disclosure provide a multi-link reconfiguration way to improve the MLO mechanism.

Referring to Fig. 5, based on the same principle as the methods provided by the embodiments of the present disclosure, the embodiments of the present disclosure also provide an electronic device, which is a Non-AP MLD, and includes:
a determining module 501 configured to determine a first wireless frame, in which the first wireless frame includes first identification information, and the first identification information indicates whether the first wireless frame is used to request multi-link reconfiguration for the Non-AP MLD; and
a sending module 502 configured to send the first wireless frame.

Optionally, in the embodiment of the present disclosure, the first identification information is carried in a first multi-link reconfiguration information element of the first wireless frame.

Optionally, in the embodiment of the present disclosure, the first identification information is carried in a multi-link control field of the first multi-link reconfiguration information element.

The first identification information is set as a first parameter value, and indicates that a type of the first wireless frame is a multi-link reconfiguration request.

Optionally, in the embodiment of the present disclosure, the first wireless frame includes a first protected EHT action information element.

The first protected EHT action information element includes second identification information, and the second identification information indicates that the type of the first wireless frame is a multi-link reconfiguration frame.

Optionally, in the embodiment of the present disclosure, the first wireless frame includes a multi-link reconfiguration request frame.

Optionally, in the embodiment of the present disclosure, the electronic device further includes:
a second receiving module configured to receive a second wireless frame, in which the second wireless frame includes third identification information, and the third identification information indicates whether the second wireless frame is used to respond to a request of the multi-link reconfiguration.

Optionally, in the embodiment of the present disclosure, the third identification information is carried in a second multi-link reconfiguration information element of the second wireless frame.

Optionally, in the embodiment of the present disclosure, the second wireless frame includes a second protected EHT action information element.

The second protected EHT action information element includes fourth identification information, and the fourth identification information indicates that a type of the second wireless frame is a multi-link reconfiguration frame.

Optionally, in the embodiment of the present disclosure, the first identification information indicates that the first wireless frame is used to request the multi-link reconfiguration for the Non-AP MLD, and a second dialog token parameter of the second wireless frame is the same as a first dialog token parameter of the first wireless frame.

Optionally, in the embodiment of the present disclosure, the third wireless frame includes sixth identification information, and the sixth identification information indicates whether the AP MLD successfully accepts the second wireless frame.

Optionally, in the embodiment of the present disclosure, the second multi-link reconfiguration information element includes status code information, and the status code information indicates whether the AP MLD accepts the request of the multi-link reconfiguration for the Non-AP MLD.

Optionally, in the embodiment of the present disclosure, the status code information is carried in an STA information field of per-STA profile corresponding to a link identifier carried in the first wireless frame.

Optionally, in the embodiment of the present disclosure, an STA control field in the per-STA profile includes a status code present indicator subfield, and the status code present indicator subfield indicates whether the status code information is present in the STA information field.

Optionally, in the embodiment of the present disclosure, the second wireless frame includes a multi-link reconfiguration response frame.

An embodiment of the present disclosure also provides a communication device, which is applied to an AP MLD, and includes:
a wireless frame determining module configured to determine a first wireless frame, in which the first wireless frame includes first identification information, and the first identification information indicates whether the first wireless frame is used to request multi-link reconfiguration for a Non-AP MLD; and
a wireless frame sending module configured to send the first wireless frame.

The device also includes other modules of the electronic device in the aforementioned embodiment, which will not be described in detail here.

Referring to Fig. 6, based on the same principle as the methods provided by the embodiments of the present disclosure, the embodiments of the present disclosure also provide an electronic device, which is an AP MLD, and includes:
a receiving module 601 configured to receive a first wireless frame, in which the first wireless frame includes first identification information, and the first identification information is used to indicate whether the first wireless frame is used to request multi-link reconfiguration for a Non-AP MLD.

Optionally, in the embodiment of the present disclosure, the first identification information is carried in a first multi-link reconfiguration information element of the first wireless frame.

Optionally, in the embodiment of the present disclosure, the first identification information is carried in a multi-link control field of the first multi-link reconfiguration information element.

The first identification information is set as a first parameter value, and indicates that a type of the first wireless frame is a multi-link reconfiguration request.

Optionally, in the embodiment of the present disclosure, the first wireless frame includes a first protected EHT action information element.

The first protected EHT action information element includes second identification information, and the second identification information indicates that the type of the first wireless frame is a multi-link reconfiguration frame.

Optionally, in the embodiment of the present disclosure, the first wireless frame includes a multi-link reconfiguration request frame.

Optionally, in the embodiment of the present disclosure, the electronic device further includes:
a second determining module configured to determine a second wireless frame, in which the second wireless frame includes third identification information, and the third identification information indicates whether the second wireless frame is used to respond to a request of the multi-link reconfiguration; and
a second sending module configured to send the second wireless frame.

Optionally, in the embodiment of the present disclosure, the third identification information is carried in a second multi-link reconfiguration information element of the second wireless frame.

Optionally, in the embodiment of the present disclosure, the second wireless frame includes a second protected EHT action information element.

The second protected EHT action information element includes fourth identification information, and the fourth identification information indicates that a type of the second wireless frame is a multi-link reconfiguration frame.

Optionally, in the embodiment of the present disclosure, the first identification information indicates that the first wireless frame is used to request the multi-link reconfiguration for the Non-AP MLD, and a second dialog token parameter of the second wireless frame is the same as a first dialog token parameter of the first wireless frame.

Optionally, in the embodiment of the present disclosure, the second multi-link reconfiguration information element includes status code information, and the status code information indicates whether the AP MLD accepts the request of the multi-link reconfiguration for the Non-AP MLD.

Optionally, in the embodiment of the present disclosure, the status code information is carried in an STA information field of per-STA profile corresponding to a link identifier carried in the first wireless frame.

An embodiment of the present disclosure also provides a communication device, which is applied to a Non-AP MLD, and includes:
a wireless frame receiving module configured to receive a first wireless frame, in which the first wireless frame includes first identification information, and the first identification information is used to indicate whether the first wireless frame is used to request multi-link reconfiguration for the Non-AP MLD.

The device also includes other modules of the electronic device in the aforementioned embodiment, which will not be described in detail here.

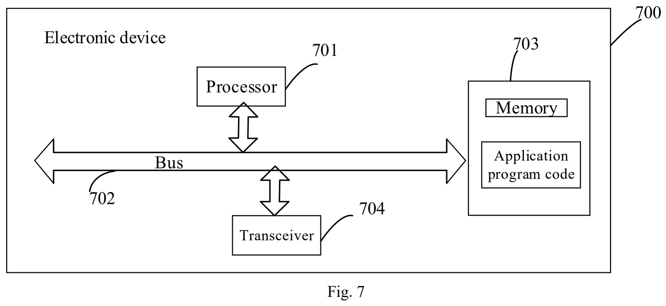

In an optional embodiment, the embodiment of the present disclosure also provides an electronic device. As shown in Fig. 7, the electronic device 700 shown in Fig. 7 may be a server, and include a processor 701 and a memory 703. The processor 701 and the memory 703 are connected, for example, by a bus 702. Optionally, the electronic device 700 may further include a transceiver 704. It should be noted that there is not only one transceiver 704 in practical applications, and the structure of the electronic device 700 does not constitute a limitation to the embodiment of the present disclosure.

The processor 701 may be a central processing unit (CPU), a general processor, a digital signal processor (DSP), an application specific integrated circuit (ASIC), a field programmable gate array (FPGA) or other programmable logic devices, transistor logic devices, hardware components or any combination thereof, which may implement or perform various illustrative logical blocks, modules, and circuits described in connection with the present disclosure. The processor 701 may also be a combination for realizing computing functions, for example, including a combination of one or more microprocessors, and a combination of a DSP and a microprocessor, etc.

The bus 702 may include a passage to transfer information between the above components. The bus 702 may be a peripheral component interconnect (PCI) bus or an extended industry standard architecture (EISA) bus. The bus 702 may be divided into an address bus, a data bus, a control bus, and the like. For the convenience of representation, only a thick line is used to show the bus in Fig. 7, but it does not mean that there is only one bus or one type of bus.

The memory 703 may be a read only memory (ROM) or other types of static storage devices that may store static information and instructions, a random access memory (RAM) or other types of dynamic storage devices that may store information and instructions. It may also be an electrically erasable programmable read only memory (EEPROM), a compact disc read only memory (CD-ROM), or other optical storages (including a compact disc, a laser disc, an optical disc, a digital versatile disc, a Blu-ray disc, etc.), a magnetic storage medium or other magnetic storage devices, or any other media that may be used to carry or store desired program codes in the form of instructions or data structures and may be accessed by a computer, but is not limited to this.

The memory 703 is used to store application codes for executing the scheme of the present disclosure, and the execution is controlled by the processor 701. The processor 701 is used to execute the application codes stored in the memory 703, so as to realize the contents shown in the aforementioned method embodiments.

The electronic device includes, but is not limited to, a mobile terminal such as a mobile phone, a notebook computer, a digital broadcast receiver, a personal digital assistant (PDA), a tablet computer (PAD), a portable multimedia player (PMP), a vehicle-mounted terminal (such as a vehicle-mounted navigation terminal), and a fixed terminal such as a digital TV and a desktop computer. The electronic device shown in Fig. 7 is only an example, and should not bring any limitation to the function and application scope of the embodiments of the present disclosure.

The server provided by the present disclosure may be an independent physical server, a server cluster or a distributed system composed of multiple physical servers, and a cloud server that provides basic cloud computing services such as cloud services, cloud databases, cloud computing, cloud functions, cloud storage, network services, cloud communication, middleware services, domain name services, security services, CDN, and big data and artificial intelligence platforms. The terminal may be a smart phone, a tablet computer, a notebook computer, a desktop computer, a smart speaker, a smart watch, etc., but it is not limited to this. The terminal and the server may be directly or indirectly connected through wired or wireless communication, which is not limited in the present disclosure.

The embodiments of the present disclosure provide a computer-readable storage medium, on which a computer program is stored, so that when it is run on a computer, the computer may execute the corresponding contents in the aforementioned method embodiments.

It should be understood that although the steps in the flow charts of the drawings are shown in sequence as indicated by the arrows, these steps are not necessarily executed in sequence as indicated by the arrows. Unless explicitly stated herein, the execution of these steps is not strictly limited in order, and they may be executed in other orders. Moreover, at least part of the steps in the flow charts of the attached drawings may include a plurality of sub-steps or stages, which may not necessarily be completed at the same time, but may be executed at different times, and the execution order thereof may not necessarily be sequential, but may be executed alternately or alternatively with other steps or at least part of sub-steps or stages of other steps.

It should be noted that the computer-readable medium mentioned above in the present disclosure may be a computer-readable signal medium or a computer-readable storage medium or any combination of the two. The computer-readable storage medium may be, for example, but not limited to, an electrical, magnetic, optical, electromagnetic, infrared, or semiconductor system, device or apparatus, or a combination of any of the above. More specific examples of computer-readable storage media may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program, which may be used by or in combination with an instruction execution system, device or apparatus. In the present disclosure, a computer-readable signal medium may include a data signal propagated in a baseband or as part of a carrier wave, in which computer-readable program codes are carried. This propagated data signal may take many forms, including but not limited to electromagnetic signals, optical signals or any suitable combination of the above. A computer-readable signal medium may also be any computer-readable medium other than the computer-readable storage medium, which may send, propagate or transmit a program for use by or in connection with an instruction execution system, device or apparatus. The program code contained in the computer-readable medium may be transmitted by any suitable medium, including but not limited to wires, optical cables, radio frequency (RF) and the like, or any suitable combination of the above.

The computer-readable medium may be included in the electronic device, or may exist alone without being assembled into the electronic device.

The computer-readable medium carries one or more programs, which, when executed by the electronic device, cause the electronic device to perform the methods shown in the above embodiments.

According to an aspect of the present disclosure, there is provided a computer program product or computer program, which includes computer instructions stored in a computer-readable storage medium. A processor of a computer device reads the computer instructions from the computer-readable storage medium, and the processor executes the computer instructions, so that the computer device performs the methods provided in the various optional implementations described above.

The computer program codes for performing the operations of the present disclosure may be written in one or more programming languages or combinations thereof, including object-oriented programming languages such as Java, Smalltalk, C++, and conventional procedural programming languages such as "C" language or similar programming languages. The program codes may be completely executed on a user computer, partially executed on the user computer, executed as an independent software package, partially executed on the user computer and partially executed on a remote computer, or completely executed on a remote computer or server. In a case involving the remote computer, the remote computer may be connected to the user computer through any kind of network, including a local area network (LAN) or a wide area network (WAN), or may be connected to an external computer (for example, through the Internet by using an Internet service provider).

The flow charts and block diagrams in the drawings illustrate the architectures, functions and operations of possible implementations of systems, methods and computer program products according to various embodiments of the present disclosure. In this regard, each block in the flow chart or block diagram may represent a module, a program segment, or a part of code that contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flow charts, and combinations of blocks in the block diagrams and/or flow charts, may be implemented by a dedicated hardware-based system that performs specified functions or operations, or by a combination of dedicated hardware and computer instructions.

The modules described in the embodiments of the present disclosure may be realized by software or hardware. The name of the module does not constitute the limitation of the module itself in some cases. For example, module A may also be described as "module A for performing operation B".

The above description only relates to the preferred embodiments of the present disclosure and the explanation of the applied technical principles. It should be understood by those skilled in the art that the scope involved in the present disclosure is not limited to the technical scheme formed by the specific combination of the above technical features, but also covers other technical schemes formed by any combination of the above technical features or their equivalent features without departing from the above concept of the present disclosure, for example, the technical schemes formed by the above features replacing the technical features with similar functions disclosed in (but not limited to) the present disclosure.

## Claims

1. A communication method, performed by a non-access point multi-link device (Non-AP MLD), comprising:
determining a first wireless frame, wherein the first wireless frame comprises first identification information, and the first identification information indicates whether the first wireless frame is configured to request multi-link reconfiguration for the Non-AP MLD; and
sending the first wireless frame.

2. The communication method according to claim 1, wherein the first identification information is carried in a first multi-link reconfiguration information element of the first wireless frame.

3. The communication method according to claim 2, wherein the first identification information is carried in a multi-link control field of the first multi-link reconfiguration information element; and
the first identification information is set as a first parameter value, and indicates that a type of the first wireless frame is a multi-link reconfiguration request.

4. The communication method according to claim 1, wherein the first wireless frame comprises a first protected extremely high throughput (EHT) action information element; and
the first protected EHT action information element comprises second identification information, and the second identification information indicates that a type of the first wireless frame is a multi-link reconfiguration frame.

5. The communication method according to any one of claims 1-4, wherein the first wireless frame comprises a multi-link reconfiguration request frame.

6. The communication method according to claim 1, further comprising:
receiving a second wireless frame, wherein the second wireless frame comprises third identification information, and the third identification information indicates whether the second wireless frame is configured to respond to a request of the multi-link reconfiguration.

7. The communication method according to claim 6, wherein the third identification information is carried in a second multi-link reconfiguration information element of the second wireless frame.

8. The communication method according to claim 6, wherein the second wireless frame comprises a second protected EHT action information element; and
the second protected EHT action information element comprises fourth identification information, and the fourth identification information indicates that a type of the second wireless frame is a multi-link reconfiguration frame.

9. The communication method according to claim 6, wherein the first identification information indicates that the first wireless frame is configured to request the multi-link reconfiguration for the Non-AP MLD, and a second dialog token parameter of the second wireless frame is the same as a first dialog token parameter of the first wireless frame.

10. The communication method according to claim 7, wherein the second multi-link reconfiguration information element comprises status code information, and the status code information indicates whether an access point (AP) MLD accepts the request of the multi-link reconfiguration for the Non-AP MLD.

11. The communication method according to claim 10, wherein the status code information is carried in a station (STA) information field of per-STA profile corresponding to a link identifier carried in the first wireless frame.

12. The communication method according to claim 11, wherein an STA control field in the per-STA profile comprises a status code present indicator subfield, and the status code present indicator subfield indicates whether the status code information is present in the STA information field.

13. The communication method according to any one of claims 6-12, wherein the second wireless frame comprises a multi-link reconfiguration response frame.

14. A communication method, performed by an access point multi-link device (AP MLD), comprising:
receiving a first wireless frame, wherein the first wireless frame comprises first identification information, and the first identification information indicates whether the first wireless frame is configured to request multi-link reconfiguration for a Non-AP MLD.

15. The communication method according to claim 14, wherein the first identification information is carried in a first multi-link reconfiguration information element of the first wireless frame.

16. The communication method according to claim 15, wherein the first identification information is carried in a multi-link control field of the first multi-link reconfiguration information element; and
the first identification information is set as a first parameter value, and indicates that a type of the first wireless frame is a multi-link reconfiguration request.

17. The communication method according to claim 14, wherein the first wireless frame comprises a first protected EHT action information element; and
the first protected EHT action information element comprises second identification information, and the second identification information indicates that a type of the first wireless frame is a multi-link reconfiguration frame.

18. The communication method according to any one of claims 14-17, wherein the first wireless frame comprises a multi-link reconfiguration request frame.

19. The communication method according to claim 14, further comprising:
determining a second wireless frame, wherein the second wireless frame comprises third identification information, and the third identification information indicates whether the second wireless frame is configured to respond to a request of the multi-link reconfiguration; and
sending the second wireless frame.

20. The communication method according to claim 19, wherein the third identification information is carried in a second multi-link reconfiguration information element of the second wireless frame.

21. The communication method according to claim 19, wherein the second wireless frame comprises a second protected EHT action information element; and
the second protected EHT action information element comprises fourth identification information, and the fourth identification information indicates that a type of the second wireless frame is a multi-link reconfiguration frame.

22. The communication method according to claim 19, wherein the first identification information indicates that the first wireless frame is configured to request the multi-link reconfiguration for the Non-AP MLD, and a second dialog token parameter of the second wireless frame is the same as a first dialog token parameter of the first wireless frame.

23. The communication method according to claim 19, wherein the second multi-link reconfiguration information element comprises status code information, and the status code information indicates whether the AP MLD accepts the request of the multi-link reconfiguration for the Non-AP MLD.

24. The communication method according to claim 23, wherein the status code information is carried in a station (STA) information field of per-STA profile corresponding to a link identifier carried in the first wireless frame.

25. The communication method according to claim 24, wherein an STA control field in the per-STA profile comprises a status code present indicator subfield, and the status code present indicator subfield indicates whether the status code information is present in the STA information field.

26. The communication method according to any one of claims 19-25, wherein the second wireless frame comprises a multi-link reconfiguration response frame.

27. An electronic device, which is a Non-AP MLD, and comprises:
a determining module configured to determine a first wireless frame, wherein the first wireless frame comprises first identification information, and the first identification information indicates whether the first wireless frame is configured to request multi-link reconfiguration for the Non-AP MLD; and
a sending module configured to send the first wireless frame.

28. An electronic device, which is an AP MLD, and comprises:
a receiving module configured to receive a first wireless frame, wherein the first wireless frame comprises first identification information, and the first identification information indicates whether the first wireless frame is configured to request multi-link reconfiguration for a Non-AP MLD.

29. An electronic device, comprising a memory, a processor and a computer program stored in the memory and executable on the processor, wherein the processor realizes the method according to any one of claims 1-13 or the method according to any one of claims 14-26 when executing the computer program.

30. A computer-readable storage medium, storing a computer program, which, when executed by a processor, realizes the method according to any one of claims 1-13 or the method according to any one of claims 14-26.
